Europäisches Patentamt

(19) European Patent Office

Office européen des brevets

(11) Publication number: **0 186 325 B1**

# EUROPEAN PATENT SPECIFICATION

(45) Date of publication of patent specification: **24.04.91**  (51) Int. Cl.⁵: **F16F 9/52**, F16F 9/34

(21) Application number: **85308657.7**

(22) Date of filing: **28.11.85**

(54) Fluid flow control apparatus.

(30) Priority: **20.12.84 US 684219**
**20.12.84 US 684220**

(43) Date of publication of application:
**02.07.86 Bulletin 86/27**

(45) Publication of the grant of the patent:
**24.04.91 Bulletin 91/17**

(84) Designated Contracting States:
**DE FR GB IT NL SE**

(56) References cited:
**DE-A- 2 947 370**
**FR-A- 1 443 369**
**US-A-.3 006 441**
**US-A- 3 018 854**

**PATENT ABSTRACTS OF JAPAN, vol. 9, no.
124 (M-383)[1847], 29th May 1985; & JP-A-60
8538 (ATSUGI JIDOUSHIYA BUHIN K.K.)
17-01-1985**

**PATENT ABSTRACTS OF JAPAN, vol. 9, no.
111 (M-379)[1834], 15th May 1985; & JP-A-59
231 232 (ATSUGI JIDOUSHIYA BUHIN K.K.)
25-12-1984**

(73) Proprietor: **TEXAS INSTRUMENTS INCORPO-
RATED**
**13500 North Central Expressway**
**Dallas Texas 75265(US)**

(72) Inventor: **Ty, Henry**
**849 West Street**
**Attleboro, MA 02703(US)**
Inventor: **McDermott, Gerald L.**
**16722 Ryland Street**
**Redford, MI 48240(US)**
Inventor: **White, Alfred J.**
**48 Cleveland Street**
**N. Providence Rhode Island, 02904(US)**

(74) Representative: **Abbott, David John et al**
**Abel & Imray Northumberland House 303-306**
**High Holborn**
**London, WC1V 7LH(GB)**

**Description**

The disclosure herein is also contained in coassigned U. S. application Serial No. (16864) filed on even date herewith.

This invention relates generally to valve apparatus for controlling fluid flow and more particularly to such apparatus for controlling the flow of hydraulic fluid used in shock absorbing mechanisms.

In conventional shock absorbing mechanisms such as automotive shock absorbers a force transmitting piston is mounted in an inner pressure chamber filled with hydraulic fluid. The chamber has a valve element formed with a restrictive orifice which leads to an outer chamber charged with compressed nitrogen. When a shock is transmitted by the piston to the fluid, some fluid is forced through the aperture into the outer chamber. The size of the opening, as well as the viscosity of the fluid, determines the damping effect of the mechanism. Once the shock has abated the compressed nitrogen forces the fluid against the valve element thereby lifting it from a valve seat to allow the fluid to return to the inner pressure chamber. While this has proven to be effective and reliable, a problem has existed when such devices are used in cold climates. Since the hydraulic fluid becomes more viscous as the temperature decreases, the flow of fluid through the orifice concomitantly decreases thereby resulting in a diminution of the damping effect. That is, less shock will be absorbed in cold weather than in warm weather.

DE-A-2947370 discloses a shock absorber including a temperature controlled valve consisting of a base plate with sector shaped slots on which can slidably rotate a valve plate with similar slots under the control of radially extending bimetallic strips cantilevered outwards from a central boss on the base plate. The outer ends of the strips fit into grooves in the valve plate so that it rotates about the boss when the stips flex in response to a temperature change.

FR-A-14433369 discloses a thermostat valve having two similarly apertured cylindrical members fitting one inside the other, in which the registration of the apertures is varied by a multi-turn bimetallic coil fixed at its outer end relative to the outer cylindrical member and at its inner end to a pin carrying the inner cylindrical member.

Accordingly, it is an object of the present invention to provide a valve element for a shock absorbing mechanism which will provide a more uniform damping action regardless of temperature fluctuations in the environment in which the mechanism is used.

Another object of the invention is the provision of an improved valve element which is inexpensive, reliable, of a size such that it can be placed in existing mechanisms and one which can withstand relatively turbulent, high pressure flow on opposite sides thereof.

Other objects and features of the invention will become more readily understood from the following detailed description and appended claims when read with the accompanying drawings in which like reference numerals designate like parts throughout the figures thereof.

According to the present invention there is provided a shock absorbing mechanism having a piston in a cylinder containing a fluid medium in which fluid medium is driven by movement of the piston between the cylinder and a second chamber through a valve means having a generally circular valve seat and a valve element having a fluid control wall arranged to move towards and away from the valve seat with means biasing the valve element towards the valve seat, characterized in that there are provided a bore extending through the control wall of the valve element, a bracket attached to the valve element spaced from and extending over the bore, a bore extending through the bracket in alignment with the bore in the control wall, and a pivotally mounted pin extending through the bores, a bimetallic strip which is formed into a coil and has a first end connected to the pin and a second end connected to the bracket so that a change in temperature will cause pivotal movement of the pin, the coil being formed of several convolutions, the control wall being formed with an orifice adjacent the bore therein, and a flag mounted on the pin and adapted to pivot with the pin, the flag being arranged to slide on the control wall from a position in which the flag is in alignment with at least a portion of the orifice to a position in which the flag is completely out of alignment with the orifice.

The orifice adjacent the bore in the control wall may be formed by a pair of slots on opposite sides of the bore in the control wall. The flag element may have two wings extending from opposite sides of a central hub portion adapted to slide across the surface of the control plate to and from a position in which the two slots forming the orifice are uncovered and a position in which at least portions of the slots are covered with one wing extending over one of the slots and the other extending over the other slot.

In one embodiment the turns of the coil are all in alignment with one another along the longitudinal axis of the pin while in another embodiment they are spread out along the longitudinal axis of the pin in order to obtain greater pivotal motion of the pin.

Brief Description of the Drawings

Fig. 1 is a cross sectional view of a portion of a pressure chamber of a conventional shock absorber mechanism shown in the compression mode when it is absorbing shock;

Fig. 2 is a view similar to Fig. 1 showing an end of the shock absorber in the recovery or rebound mode when fluid is being returned to the pressure chamber;

Fig. 3 is a perspective view, blown apart, of the prior art valve mechanism used in the shock absorber shown in Figs. 1 and 2;

Fig. 4 is a top plan view of an improved valve element useful in the valve mechanism shown in Figs. 1-3;

Fig. 5 is a cross sectional side view of the Fig. 4 valve element;

Fig. 6 is a bottom plan view of the Fig. 4 valve element;

Fig. 7 is a top plan view of alternate valve element useful in other pressure chambers having more room along the longitudinal axis and in which more pivotable motion is desired;

Fig. 8 is a cross sectional side view of the Fig. 7 valve element;

Fig. 9 is a view similar to Fig. 7 of another alternative embodiment of a valve element; and

Fig. 10 is a cross sectional side view of the Fig. 9 valve element.

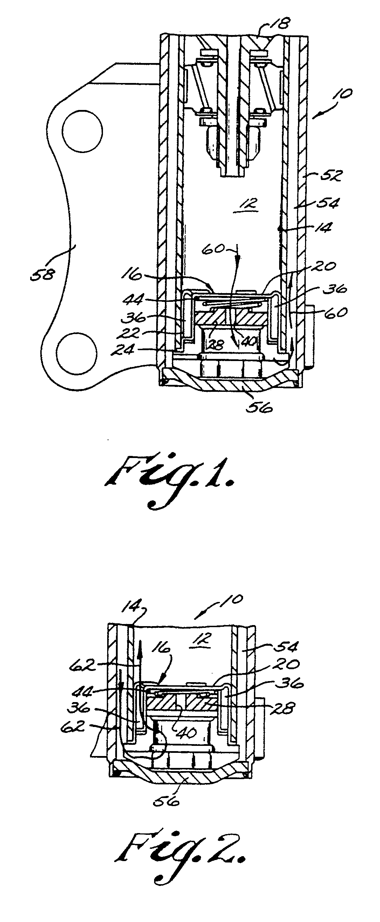

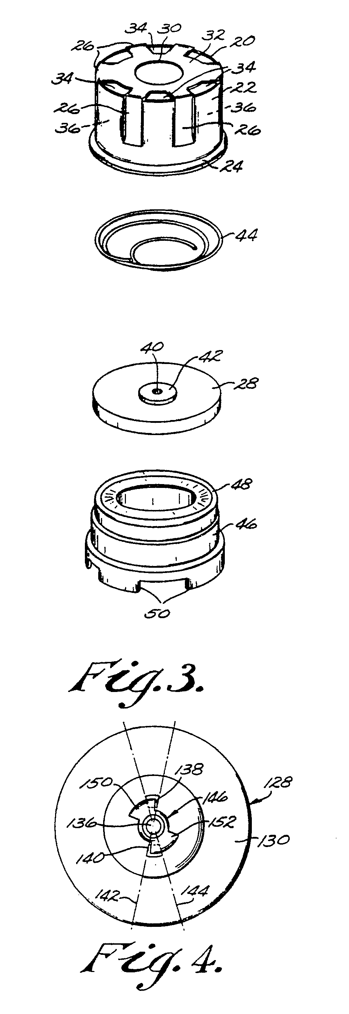

With reference to Figs. 1 and 2 numeral 10 refers to a conventional hydraulic shock absorber mechanism comprising an inner pressure chamber 12 formed by a generally cylindrical wall 14 having a first end closed by a valve assembly 16 and a shock transmitting piston 18 adapted to slide toward and away from the first end.

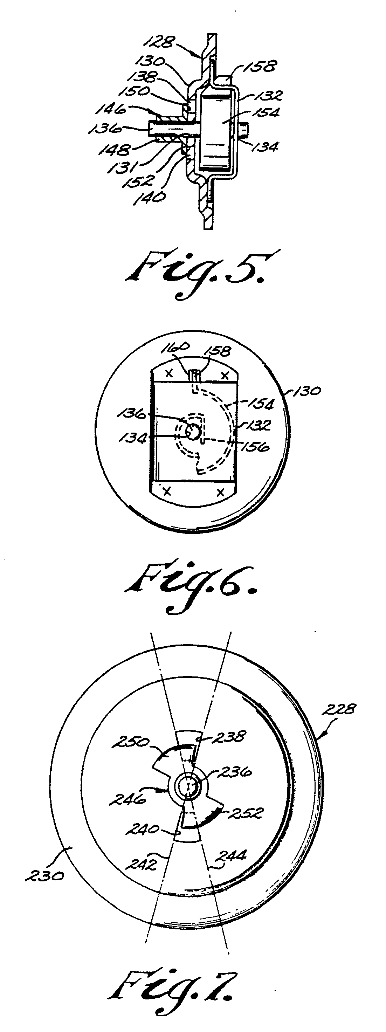

As best seen in Fig. 3, valve assembly 16 comprises a generally cylindrical cup shaped housing 20 having an upstanding side wall 22 which closely conforms to the inner surface of cylindrical wall 14 of the pressure chamber. Housing 20 is telescopically received in the first end of the pressure chamber with an outwardly extending flange 24 formed on the lower end of the housing abutting the lower distal end of wall 14. A plurality of inwardly extending ribs 26 are formed in side wall 22 and extend along the longitudinal axis of the housing over a portion of its length. The inner surface of the ribs form lands which serve as a guide surface for valve element 28 to be discussed below. The upper end of housing 20, as seen in the figures has a centrally located opening 30 in end wall 32 and an opening 34 located intermediate and adjacent each of the ribs 26. Passages 36 (see Figs. 1 and 2) core formed between adjacent ribs extending between pressure chamber 12 through aperture 34 to the interior of the housing 16.

Valve element 28 is a circular disc having a bore 40 extending therethrough from top to bottom and is shown formed with a raised platform area 42 which serves as a spring seat. Element 28 is slidingly received in housing 16 along the lands formed by the inner surface of ribs 26 with a coil spring 44 disposed intermediate end wall 32 and element 28 to provide a downward bias on element 28.

A base 46 received at the bottom end of housing 20 captures valve element 28 in the housing and is formed with an annular valve seat 48 in alignment with the outer periphery of the bottom surface of valve element 28. Base 46 is a generally tubular sleeve with a plurality of downwardly depending feet 50.

Shock absorber 10 has an outer generally cylindrical wall 52 spaced from inner wall 14 to form an outer chamber 54 which is charged with a gas, preferably nitrogen, at a selected pressure, for example 40 psi in a known manner. An end cap 56 closes outer chamber 54 capturing valve assembly 16 as shown in Figs. 1 and 2. A suitable mounting bracket 58 is provided to mount the shock absorber in its desired location.

With valve element 28 in its Fig. 1 position there is a fluid passage between pressure chamber 12 and outer chamber 54 which extends through opening 30 of housing 20, box 40 of valve element 28, the center of base 46 through the space between feet 50.

With valve element 28 in its Fig. 2 position there is a fluid passage between outer chamber 54 and pressure chamber 12 which extends through the space between feet 50, the center of base 46 around the outer periphery of valve element 28, through passage 36 and openings 34 as well as through bore 40 of valve element 28.

In its at rest position shown in Fig. 1 a selected quantity of fluid medium such as suitable hydraulic fluid is disposed in pressure chamber 12. Valve element 28 is biased into contact with valve seat 48 so that the only passage between the inner and outer chambers is through bore 40, the diameter of which is selected to provide a desired damping effect based on the viscosity of the fluid medium. For example, when a shock is received via the wheels of a vehicle through piston 18, fluid is forced through bore 40 as indicated by arrows 60 into the outer chamber further compressing the nitrogen. Once the shock has been spent, the fluid medium which has passed through bore 40 now exerts sufficient force on the bottom of valve element 28 due to the compressed nitrogen to lift element 28 from the valve seat thereby permitting fluid to flow through passages 36 as indicated by arrows 62, as well as through bore 40, into chamber 12 to revert back to the at rest position.

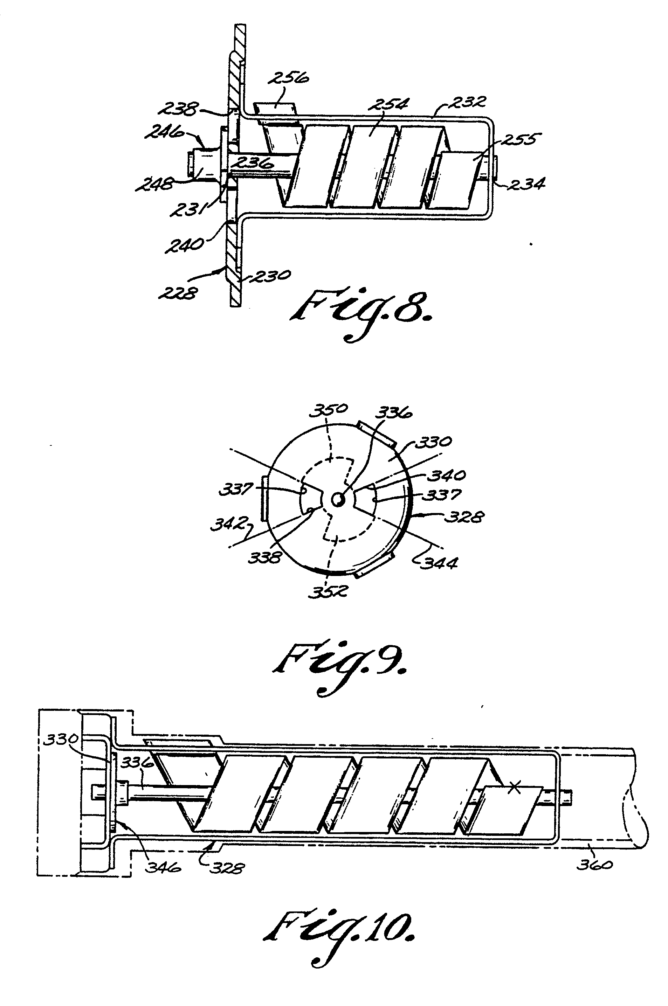

In order to provide a more uniform damping action in variable temperature environments, an improved valve element 128 is shown in Figs. 4-6 according to a first embodiment of the invention. Valve element 128 has a generally circular base plate or control wall 130 the outer periphery of which is adapted to move into and out of engagement with valve seat 48 in the same manner as valve element 28. Control wall 130 has a centrally located bore 131 extending therethrough and has a bracket 132 welded to the bottom surface on opposite sides of bore 131. Bracket 132 is generally U-shaped so that the bight portion extending across bore 131 is spaced therefrom forming a sensor cavity between the bracket and the control wall. A bore 134 is formed in bracket 132 in alignment with bore 131 in control wall 130 and a shaft or pin 136 is rotatably mounted in the two bores.

An orifice is formed in control wall 130 preferably in the form of a pair of similarly configured slots 138, 140 disposed adjacent to and on opposite sides of bore 131. A first edge of slot 138 forms a straight line the imaginary continuation of which passes through the longitudinal axis of pin 136 and coincides with an edge of slot 140 as indicated by center line 142 on Fig. 4. A second edge of slot 138 forms a straight line the imaginary continuation of which passes through the longitudinal axis of pin 136 and coincides with another edge of slot 140 as indicated by center line 144.

A flag element 146 configured generally in the shape of a bow tie has a central hub portion 148 and a pair of diametrically opposed wings 150, 152 extending therefrom. Hub portion 148 is bored and receives pin 136 therein and is fixedly attached to the pin in any suitable manner, as by welding or brazing. The wings of flag 146 are adapted to slide over the surface of control wall 130 as pin 136 pivots.

As seen in Fig. 4, wings 150, 152 are adapted to move out of alignment with respective slots 138, 140 through a counterclockwise rotation of pin 136 to thereby give a maximum orifice size. A slight clockwise movement as seen in the Figure will result in a minimum orifice size with all but the outer peripheral portion of the slots covered by the wings 150, 152 a minimum orifice size.

Also attached to pin 136 is a thermostatic element 154 used to control the angular position of pin 136 and concomitantly flag 146. Thermostatic element 154 is in the form of a spiral coil having several convolutions in alignment with one another along the longitudinal axis of pin 136 in order to use a minimum amount of space along the first, inner end 156 is fixedly attached to pin 136 in a suitable manner as by welding and a second, outer end 158 fixedly mounted to bracket 132 as by inserting end 158 through a slot 160 in bracket 132 to thereby capture it.

Thus at temperatures above a selected level, for example 32°C, the thermostat metal will cause the pin and flag to pivot so that wings 150, 152 are in alignment with the slots to provide a desired minimum orifice equivalent in size to that of bore 40 in valve element 28. That is, wings 150, 152 extend a lesser distance from pin 136 than the distance of the outer edge of slots 138, 140. Wings 150, 152 are sufficiently wider than slots 138, 140 to accommodate the degree of rotation of pin 136 caused by exposing the thermostat metal to the higher portion of the temperature range to which the device will be subjected; that is, for example from 32°C to 93°C. However, at temperature below 32°C the total size of the orifice will increase by movement of thermostat metal 154 causing wings 150, 152 to move out of alignment with respective slots 138, 140 until at a selected lower temperature value, e.g. -7°C, the orifice will be at a maximum size and will stay fully opened down to a level below the expected temperature range to which the device will be subjected, e.g. -45°C. By way of example, as shown in Fig. 4 the orifice of a device made in accordance with the invention is for 24°C.

Thus as temperature decreases below a level selected based on the viscosity of the fluid used and its change with temperature the size of the orifice enlarges so that generally the same degree of dampening is obtained by the passage of fluid through the orifice when piston 18 is subjected to a shock.

In the Figs. 4-6 embodiment the use of space along the longitudinal axis is minimized by aligning all the convolutions of the spiral on the longitudinal axis. In an alternate embodiment of the sensor shown in Figs. 7 and 8 the use of space in the radial direction is minimized by spreading out the convolutions of the thermostat metal along the longitudinal axis so that a given length of metal providing a selected degree of rotation can be placed in a smaller cylindrical housing. The spatial requirements of a particular application will dictate which embodiment will be employed. With reference to Figures 7 and 8, a valve element 228 has a generally circular control wall 230 with a centrally located bore 231 extending therethrough. A bracket 232 is welded to a surface of wall 230 on opposite sides of bore 231. As in the Figure 4-6 embodiment, the bracket is generally U-shaped to provide a sensor cavity between the bracket and the control wall however the legs are sufficiently long to space the bight portion far enough away from the control wall to accommodate the selected thermostat metal coil. A bore 234 is formed in bracket 232 in alignment with bore 231 and an elongated shaft or pin 236 is rotatably mounted in the two bores.

An orifice is formed in control wall 230 preferably in the form of a pair of similarly configured slots 238, 240 disposed adjacent to and on opposite sides of bore 231. A first edge of slot 238 forms a straight line, the imaginary continuation of which passes through the longitudinal axis of pin 236 and coincides with an edge of slot 240 as indicated by center line 242 in Fig. 7. A second edge of slot 238 forms a straight line, the imaginary continuation of which also passes through the longitudinal axis of pin 236 and coincides with another edge of slot 240 as indicated by center line 244.

A flag element 246, similar to element 146 of Figs. 4-6, has a bored central hub portion 248 fixedly mounted on pin 236 and a pair of diametrically opposed wings 250, 252 extending therefrom. Wings 250, 252 are adapted to slide over the surface of control wall 230 as pin 236 pivots. Thermostat metal strip 254 has a first end 255 fixedly attached, as by welding, to pin 236 near the bight of bracket 232 and a second end 256 captured in a slot in one of the legs of bracket 232. The particular length of the legs of U-shaped bracket 232 are chosen to accommodate the selected length of thermostat metal strips 254 which is configured into a plurality of convolutions having generally the same outside diameter but spread out along the longitudinal axis of pin 236 to form a helix.

In Figures 9 and 10 is shown a modification of the invention in which the flag element 346 is used to regulate the size of the orifice in control wall 330 from fully open to a fully closed condition. That is wings 350, 352 extend radially from pin 336 a distance greater than the outer edge 337 of slots 338, 340. Element 328 is also shown to be mounted as a stationary member with the valve function being performed entirely by flag 346. As in the previous embodiments, the slots are defined by edges which coincide with centerliners 342 and 344 passing through the longitudinal axis of pin 336.

Although the invention has been described with respect to specific preferred embodiments thereof, many variations and modifications will become apparent to those skilled in the art. It is the intent that the appended claims be interpreted as broadly as possible in view of the prior art to include all such variations and modifications.

## Claims

1. A shock absorbing mechanism having a piston in a cylinder (12) containing a fluid medium in which fluid medium is driven by movement of the piston between the cylinder and a second chamber (54) through a valve means (16) having a generally circular valve seat (48) and a valve element (28) having a fluid control wall arranged to move towards and away from the valve seat with means (44) biasing the valve element towards the valve seat, characterised in that there are provided a bore (131) extending through the control wall (128) of the valve element, a bracket (132) attached to the valve element spaced from and extending over the bore, a bore (134) extending through the bracket in alignment with the bore in the control wall, and a pivotally mounted pin (136) extending through the bores a bimetallic strip (154) which is formed into a coil and has a first end connected to the pin and a second end connected to the bracket so that a change in temperature will cause pivotal movement of the pin, the coil being formed of several convolutions, the control wall being formed with an orifice (138,140) adjacent the bore therein, and a flag (146) mounted on the pin and adapted to pivot with the pin, the flag being arranged to slide on the control wall from a position in which the flag is in alignment with at least a portion of the orifice to a position in which the flag is completely out of alignment with the orifice.

2. A shock absorbing mechanism according to claim 1 in which the orifice adjacent the bore in the control wall is formed by a pair of slots (238,240) on opposite sides of the bore in the control wall.

3. A shock absorbing mechanism according to claim 2 in which an edge of one slot of the pair extends in a line (242) the imaginary continuation of which passes through the longitudinal axis of the pin and coincides with an edge of the other slot of the pair and a second edge of the one slot extends in another line (244) the imaginary continuation of which passes through the longitudinal axis of the pin and coincides with another edge of the other slot.

4. A shock abosorbing mechanism according to claim 3 in which the flag comprises a hub portion (148) affixed to the pin and a pair of wings (150,152) extending radially from the hub on opposite sides of the pin.

5. A shock absorbing mechanism according to claim 4 in which the slots extend in a radial direction a first distance and the wings extend in a radial direction a second distance with the second distance being less than the first distance.

6. A shock absorbing mechanism according to claim 1 in which the bracket is formed with a slot (160) and the second end (158) of the coil extends through and is captured in the slot.

**Revendications**

1. Amortisseur de choc comprenant un piston logé dans un cylindre (12) contenant un milieu fluide, dans lequel le milieu fluide est refoulé par le mouvement du piston entre le cylindre et une deuxième chambre (54) à travers un clapet (16) qui comprend un siège de clapet (48) de forme générale circulaire et un élément mobile de clapet (28) possédant une paroi de commande du fluide agencée pour se rapprocher et s'éloigner du siège de clapet, avec des moyens (44) qui sollicitent l'élément mobile de clapet vers le siège de clapet, caractérisé en ce qu'il y est prévu un perçage (131) qui traverse la paroi de commande (128) de l'élément mobile de clapet, une ferrure (132) fixée à l'élément mobile de clapet, espacée du perçage et qui s'étend au-dessus du perçage, un perçage (134) qui traverse la ferrure dans l'alignement du perçage traversant la paroi de commande, et une tige (136) montée pivotante, qui traverse les perçages, une lamelle bimétallique (154) qui est mise en forme d'enroulement et présente une première extrémité reliée à la tige et une deuxième extrémité reliée à la ferrure, de sorte qu'une variation de la température provoque un mouvement de pivotement de la tige, l'enroulement étant formé de plusieurs spires, la paroi de commande étant munie d'un orifice (138, 140) contigü à son perçage, et une palette (146) montée sur la tige et adaptée pour pivoter sur la tige, la palette étant agencée pour glisser sur la paroi de commande, pour passer d'une position dans laquelle la palette est dans l'alignement d'au moins une portion de 1'orifice, à une position dans laquelle la palette est entièrement hors d'alignement de l'orifice.

2. Mécanisme amortisseur selon la revendication 1, dans lequel l'orifice contigü au perçage de la paroi de commande est formé d'une paire de fentes (238, 240) situées de part et d'autre du perçage de la paroi de commande.

3. Mécanisme amortisseur de choc selon la revendication 2, dans lequel un bord d'une fente de la paire s'étend selon une ligne (242) dont le prolongement imaginaire passe par l'axe longitudinal de la tige et coïncide avec un bord de l'autre fente de la paire, et un deuxième bord de la fente s'étend selon une autre ligne (244) dont le prolongement imaginaire passe par l'axe longitudinal de la tige et coïncide avec un autre bord de l'autre fente.

4. Mécanisme amortisseur de choc selon la revendication 3, dans lequel la palette comprend une portion moyeu (148) fixée à la tige et une paire d'ailes (150, 152) qui s'étendent radialement à partir du moyeu, de part et d'autre de la tige.

5. Mécanisme amortisseur de choc selon la revendication 4, dans lequel les fentes s'étendent dans une direction radiale sur une première distance, et les ailes s'étendent dans une direction radiale sur une deuxième distance, la deuxième distance étant inférieure à la première distance.

6. Mécanisme amortisseur de choc selon la revendication 1, dans lequel la ferrure est munie d'une fente (160) et la deuxième extrémité (158) de l'enroulement passe à travers la fente et est retenue dans cette fente.

**Ansprüche**

1. Stoßdämpfer-Mechanismus mit einem Kolben in einem Zylinder (12), der ein Strömungsmittel enthält, wobei das Strömungsmittel durch Bewegung des Kolbens zwischen dem Zylinder und einer zweiten Kammer (54) durch eine Ventileinrichtung (16) getrieben wird, die einen allgemein kreisförmigen Ventilsitz (48) aufweist, sowie ein Absperrelement (28) mit einer Strömungsmittel-Steuerwand, die so angebracht ist, daß sie sich auf den Ventilsitz zu und von ihm weg bewegen kann, wobei eine Einrichtung (44) vorgesehen ist, die das Absperrelement in Richtung zum Ventilsitz vorspannt, gekennzeichnet durch eine Bohrung (131), die sich durch die Steuerwand (128) des Absperrelements erstreckt, eine an dem Absperrelement im Abstand von der Bohrung und über dieser angebrachte Klammer (132), eine fluchtend mit der Bohrung in der Steuerwand durch die Klammer verlaufende Bohrung (134) und einen drehbar gelagerten Stab (136), der sich durch die Bohrungen erstreckt, einen bimetallischen Streifen (154), der in Spiralform ausgebildet ist und ein erstes Ende aufweist, das mit dem Stab verbunden ist, und ein zweites Ende, das mit der Klammer verbunden ist, so daß eine Temperaturänderung eine Schwenkbewegung des Stabes verursacht, wobei Hie Spirale aus mehreren Windungen gebildet ist und die Steuerwand mit einer Öffnung (138, 140), die an die Bohrung darin angrenzt, ausgebildet ist, und eine Fahne (146), die auf dem Stab angebracht ist und sich mit dem Stab drehen kann, wobei die Fahne so angebracht ist, daß sie auf der Steuerwand von einer Position, in der sie mit wenigstens einem Teil der Öffnung fluchtet, in eine Position gleitet, in der sie vollständig nichtfluchtend zu der Öffnung liegt.

2. Stoßdämpfer-Mechanismus nach Anspruch 1, bei dem die an die Bohrung in der Steuerwand angrenzende Öffnung durch zwei Schlitze (238, 240) auf einander gegenüberliegenden Seiten der Bohrung in der Steuerwand gebildet ist.

3. Stoßdämpfer-Mechanismus nach Anspruch 2, bei dem eine Kante einer der beiden Schlitze in einer Linie (242) verläuft, deren gedachte Fortsetzung durch die Längsachse des Stabes verläuft und sich mit einer Kante des anderen der beiden Schlitze deckt, und eine zweite Kante des einen Schlitzes in einer anderen Linie (244) verläuft, deren gedachte Fortsetzung durch die Längsachse des Stabes verläuft und sich mit einer anderen Kante des anderen Schlitzes deckt.

4. Stoßdämpfer-Mechanismus nach Anspruch 3, bei dem die Fahne einen Nabenteil (148) aufweist, der an dem Stab befestigt ist, sowie zwei Flügel (150, 152), die radial von dem Nabenteil auf einander gegenüberliegenden Seiten des Stabes abstehen.

5. Stoßdämpfer-Mechanismus nach Anspruch 4, bei dem die Schlitze in radialer Richtung in einem ersten Abstand verlaufen, und die Flügel in radialer Richtung in einem zweiten Abstand verlaufen, wobei der zweite Abstand kleiner als der erste Abstand ist.

6. Stoßdämpfer-Mechanismus nach Anspruch 1, bei dem die Klammer einen von dem zweiten Ende (158) der Spirale durchdrungenenSchlitz (160) aufweist, in dem dieses zweite Ende festgehalten ist.

Fig.1.

Fig.2.

*Fig.3.*

*Fig.4.*

*Fig.5.*

*Fig.6.*

*Fig.7.*

*Fig.8.*

*Fig.9.*

*Fig.10.*